# EUROPEAN PATENT SPECIFICATION

(11) **EP 4 608 692 B1**
(45) Date of publication and mention of the grant of the patent: **23.09.2026**
(21) Application number: 22821309.6
(22) Date of filing: 25.10.2022
(51) Int. Cl.: B60W 10/18, B60W 10/26, B60W 10/28, B60W 20/12, B60W 20/14

(54) **A CONTROL SYSTEM FOR CONTROLLING A POWERTRAIN OF A VEHICLE**
STEUERUNGSSYSTEM ZUR STEUERUNG EINES ANTRIEBSSTRANGS EINES FAHRZEUGS
SYSTÈME DE COMMANDE POUR COMMANDER UN GROUPE MOTOPROPULSEUR D'UN VÉHICULE

(43) Date of publication of application: 03.09.2025
(73) Proprietor: VOLVO TRUCK CORPORATION, 405 08 Göteborg (SE)
(72) Inventor: BLOMGREN, Fredrik, 425 35 Kärra (SE)
(74) Representative: Kransell & Wennborg KB
(86) International application number: PCT/EP2022/079800
(87) International publication number: WO 2024/088523

(56) References cited:
- WO-A1-2022/268552
- US-A1- 2011 066 308
- US-A1- 2017 282 895
- US-A1- 2018 065 499
- US-A1- 2021 284 124

## Description

### TECHNICAL FIELD

The disclosure relates generally to powertrain control of a vehicle. In particular aspects, the disclosure relates to a control system for controlling a powertrain of a vehicle, a computer-implemented method for controlling a powertrain of a vehicle, a vehicle, a computer program product and a non-transitory computer-readable storage medium. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A vehicle may be driven by use of different power sources, such as by an internal combustion engine and/or an electric motor. For example, electric energy for powering an electric motor of a vehicle powertrain may be provided from an electrical energy storage system (EESS) and/or from a fuel cell system. The EESS may also be denoted a battery, and is typically a high voltage battery, such as a lithium-ion battery comprising a plurality of electrochemical lithium-ion cells.

A conventional vehicle which comprises an internal combustion engine may use the internal combustion engine for braking, i.e. by so called engine braking. This may be advantageous when driving downhill, thereby saving other brake systems of the vehicle. The other brake systems may be service brakes, such as disc or drum brakes, and auxiliary brake systems, such as a retarder. Engine braking is for example commonly used by larger heavier vehicles, such as trucks, buses and construction equipment, e.g. wheel loaders, dump trucks, excavators etc. US 2021/284124 A1 discloses a control system for controlling a powertrain of a vehicle comprising an electrical energy storage system (EESS).

When the powertrain comprises an EESS, braking may be provided by regenerative brake power, i.e. by using the electric motor as a generator and charging the EESS. Accordingly, the EESS and the electric motor may be regarded to provide another sort of engine braking. However, when the EESS is fully charged, there is no longer any possibility to provide regenerative brake power.

When the powertrain comprises a fuel cell system, the fuel cell system can typically not be used for providing any brake power to the vehicle.

**In** view of the above, there is a strive to develop improved technology for controlling vehicle powertrains comprising a fuel cell system and an EESS. In particular, there is a strive to optimize the use of such powertrains to e.g. increase efficiency and safety.

### SUMMARY

According to a first aspect of the disclosure, there is provided a control system according to claim 1 for controlling a powertrain of a vehicle, wherein the powertrain comprises a fuel cell system (FCS) and an electrical energy storage system (EESS), the control system comprising:
- a route planner which is configured to:
   - determine a respective target state of charge (SOC) level for the EESS at one or more respective target points along a planned route for the vehicle, and
   - determine a respective target brake distribution level between braking systems of the vehicle for one or more respective downhill sections along the planned route, wherein the braking systems comprise a regenerative braking system comprising the EESS and at least one additional braking system,
- a controller for controlling a flow of energy of the powertrain during operation, wherein the flow of energy comprises a flow of energy from the FCS and from/to the EESS, wherein the controller is configured to:
   - continuously control the flow of energy in dependence on operating constraints along a look-ahead portion of the planned route located immediately ahead of the vehicle during operation, wherein the look-ahead portion is shorter than a total length of the planeed route,
   - receive the determined respective target SOC level(s) and target brake distribution level(s) from the route planner, and
   - continuously control the flow of energy in dependence on the determined respective target SOC level(s) and target brake distribution level(s) of the respective target point(s) and downhill section(s) which are located within the look-ahead portion, wherein the target brake distribution level(s) is/are determined to avoid that the at least one additional braking system is no longer working further ahead along the planned route.

The first aspect of the disclosure may seek to improve the efficiency of the powertrain during operation and/or increase the safety of the vehicle during operation. For example, the present disclosure is based on a realization that it may be advantageous to plan target SOC level(s) and target brake distribution level(s) for an entire route, and not only for a portion of the route. A technical benefit may include that the controller is able to improve the optimization of the use of the fuel cell system and the EESS during operation. For example, by using the target SOC level(s) and target brake distribution level(s) which are associated with the look-ahead portion, in addition to the operating constraints, fuel consumption and safety along the entire planned route may be improved. Accordingly, the present disclosure may seek to reduce a risk of sub-optimization, i.e. by not taking the entire planned route into consideration. For example, by using the target SOC level(s) which is/are provided by the route planner, it may be avoided that regenerative braking power cannot be used further ahead along the planned route due to a fully charged EESS. As another example, by using the target SOC level(s) which is/are provided by the route planner, it may be avoided that the SOC level of the EESS is too low at certain portions along the planned route where it would be advantageous to use electrical energy from the EESS, such as during long uphill climbs which are longer than the look-ahead portion. As yet another example, by using the target brake distribution level(s) which is/are provided by the route planner, the brake ability of the vehicle may be improved during downhill driving, e.g. by avoiding that regenerative braking is not available further ahead along the planned route, or by avoiding that the at least one additional braking system is no longer working further ahead along the planned route.

The present disclosure is also based on a realization that it may be advantageous to not include all functionality in the controller. Instead, a route planner is used for determining target SOC level(s) and target brake distribution level(s) for a planned route, whereas the controller is controlling the flow of energy in dependence on information relating to the look-ahead portion. A technical benefit may include that less processing power is required for the controller, implying faster processing and/or reduced cost. The route planner and the controller may be separate units, separate sub-units and/or the functionality of the route planner and the controller may be implemented as separate softwares.

The look-ahead portion may correspond to a few kilometers (km) immediately ahead of the vehicle, such as less than 10, 9, 8, 7, 6, 5, 4, 3, 2 or 1 km. A shorter look-ahead portion may imply a reduced need of processing power for the controller and a longer look-ahead portion may imply improved optimization of the flow of energy of the powertrain. The look-ahead portion is shorter than a total length of the planned route, such as corresponding to less than 60 %, 50 %, 40 %, 30 %, 20 % or 10 % of the total length of the planned route.

The planned route may be a planned route for performing a driving mission, such as driving of a load from one point to another point in an area. The planned route may be provided by a user, such as via a human machine interface. Additionally, or alternatively, the planned route may be obtained from a memory and/or from a remote unit, such as from a back-office central. For example, the planned route may be communicated to the control system by a wireless or a wired connection with the remote unit and/or the memory.

In some examples, at least one of the one or more respective target points is associated with a first slope section along the planned route. A technical benefit may include that the flow of energy of the powertrain during driving along the first slope section is optimized for the entire planned route and not only for the first slope section. In further examples, a first target point is associated with a bottom portion of the first slope section and a second target point is associated with a top portion of the first slope section. A technical benefit may include that the optimization of the flow of energy of the powertrain is further improved. In yet further examples, the first slope section is a downhill section for which a respective target brake distribution level is determined. Thereby, the flow of energy may be further improved, also for example including when regenerative braking should be used during driving in the downhill section. This implies increased safety during downhill travelling, e.g. by deciding when and to what extent service brakes, regenerative braking and/or auxiliary brakes shall be used.

Optimizing the flow of energy of the powertrain as discussed herein may be performed in various ways. For example, the flow of energy may be optimized in view of one or more optimizing parameters, such as total fuel consumption, productivity, service life of different vehicle components, such as the fuel cell system, the EESS and/or the braking systems.

To control the flow of energy in dependence on the determined respective target SOC level(s) and target brake distribution level(s) as disclosed herein typically means to control the flow of energy so that the determined target SOC level(s) and target brake distribution level(s) are reached, or at least almost reached, at each respective target point and downhill section along the planned route. However, at some target points or at some downhill sections, the controller may not be able to reach the target SOC level(s) or target brake distribution level(s). Accordingly, in some examples, the controller may be configured to inform the route planner that a target SOC level and/or target brake distribution level was not reached at the respective target point or downhill section. In further examples, the route planner may be configured to update upcoming target SOC level(s) and/or target brake distribution level(s) in response to the information received from the controller. Thereby, the optimization of the flow of energy may be further improved for the remaining part of the planned route.

In some examples, at least one of the one or more respective target points is associated with a second slope section along the planned route, wherein the second slope section is an uphill section. Thereby, the flow of energy of the powertrain during driving along the uphill section may be optimized for the entire planned route and not only for the uphill section. For example, the flow of energy may be optimized by also considering an upcoming slope section which is located further ahead of the look-ahead portion. In further examples, a third target point is associated with a bottom portion of the second slope section and a fourth target point is associated with a top portion of the second slope section. Thereby, the flow of energy may be further improved, e.g. by controlling the flow of energy so that the determined SOC levels at the third and fourth target points are reached.

In some examples, at least one respective target SOC level and/or brake distribution level for at least one respective target point and/or downhill section is determined at, or before, initiating driving of the vehicle along the planned route. Thereby, a more proactive planning of how to control the flow of energy of the powertrain during the planned route may be achieved. This also implies that less processing power may be used during driving along the planned route. Accordingly, the processing may be faster and/or the control system may be more cost effective.

In some examples, at least one respective target SOC level and/or brake distribution level for at least one respective target point and/or downhill section is determined before the at least one respective target point and/or downhill section is located within the look-ahead portion of the vehicle during operation. Thereby, the flow of energy of the powertrain may be optimized for the entire planned route, and not only for the part of the planned route which is within the look-ahead portion. This also implies that less processing power may be used during driving along the planned route. Accordingly, the processing may be faster and/or the control system may be more cost effective. This may also imply that the look-ahead portion can be made shorter, thereby reducing the need for processing power.

In some examples, the operating constraints are at least one of a set vehicle speed associated with the look-ahead portion, a topography associated with the look-ahead portion and a vehicle weight.

In some examples, the controller is configured to receive the determined respective target SOC level(s) and target brake distribution level(s) from the route planner at respective waypoints along the planned route during driving along the planned route. Thereby, less processing power and/or memory may be required. For example, not all of the determined target SOC levels and brake distribution levels may be available for the controller at the beginning of driving along the planned route. A waypoint may be defined as a point along the planned route, e.g. as coordinates in a coordinate system, and/or a waypoint may correspond to a time period from initiating the driving along the planned route.

In some examples, the route planner is further configured to:
- determine a need to switch an operation of the FCS between a maximum power mode and a lower power mode at one or more respective auxiliary target points along the planned route, and
wherein the controller is further configured to:
- receive the determined need to switch the operation of the FCS from the route planner, and
- switch operations of the FCS according to the determined need to switch operation when reaching the respective auxiliary target point during driving along the planned route.

Thereby, the use of the FCS and the EESS may be further improved. For example, in some situations, such as during an uphill climb which is longer than the look-ahead portion, it may be advantageous to maximize the power output from the FCS so that the SOC level of the EESS is not reduced to zero before reaching the top of the uphill climb.

In further examples, the control system is configured to only allow to switch operation when a first criterion is fulfilled. Typically, the control system may only be allowed to switch from the lower power mode to the maximum power mode when the first criterion is fulfilled. For example, the first criterion may relate to a level of degradation of the FCS, such as when the level of degradation is below a threshold, i.e. not too high. When the level of degradation is high, e.g. above a threshold, the FCS may be too negatively affected by utilizing the maximum power mode. Additionally, or alternatively, the first criterion may relate to how many times and/or for how long time the FCS has been operated in the maximum power mode. If the FCS has been in the maximum power mode too many times and/or for too long time, e.g. by exceeding a threshold, it may not be allowed to switch to the maximum power mode anymore, or at least not for a certain time period.

According to a second aspect of the disclosure, there is provided a computer-implemented method according to claim 12 for controlling a powertrain of a vehicle, wherein the powertrain comprises a fuel cell system (FCS) and an electrical energy storage system (EESS), the method comprising:
- determining, by a route planner of a control system, a respective target state of charge (SOC) level for the EESS at one or more respective target points along a planned route for the vehicle, and
- determining, by the route planner, a respective target brake distribution level between braking systems of the vehicle for one or more respective downhill sections along the planned route, wherein the braking systems comprise a regenerative braking system comprising the EESS and at least one additional braking system,

the method further comprising:
   - receiving, by a controller of the control system, the determined respective target SOC level(s) and target brake distribution level(s), and
   - controlling, by the controller, a flow of energy of the powertrain during operation, wherein the flow of energy comprises a flow of energy from the FCS and from/to the EESS,
wherein controlling the flow of energy comprises:
   - continuously controlling the flow of energy in dependence on operating constraints along a look-ahead portion of the planned route located immediately ahead of the vehicle during operation, and further in dependence on the determined respective target SOC level(s) and target brake distribution level(s) of the respective target point(s) and downhill section(s) which are located within the look-ahead portion, wherein the look-ahead portion is shorter than a total length of the planned route, and wherein the target brake distribution level(s) is/are determined to avoid that the at least one additional braking system is no longer working further ahead along the planned route.

Advantages and effects of the second aspect of the disclosure are analogous to the advantages and effects of the first aspect of the disclosure, and vice versa.

In some examples, at least one of the one or more respective target points is associated with a first slope section along the planned route.

In some examples, a first target point is associated with a bottom portion of the first slope section and a second target point is associated with a top portion of the first slope section.

In some examples, the first slope section is a downhill section for which a respective target brake distribution level is determined.

In some examples, at least one of the one or more respective target points is associated with a second slope section along the planned route, wherein the second slope section is an uphill section.

In some examples, the method further comprises:
- determining, by the route planner, a need to switch an operation of the FCS between a maximum power mode and a lower power mode at one or more respective auxiliary target points along the planned route,
- receiving, by the controller, the determined need to switch the operation of the FCS, and
- switching operation, by the controller, of the FCS according to the determined need to switch operation when reaching the respective auxiliary target point during driving along the planned route.

The method may only allow to switch operation when a first criterion is fulfilled as mentioned in the above with respect to the control system.

According to a third aspect of the disclosure, there is provided a vehicle according to claim 13 comprising a powertrain, wherein the powertrain comprises a fuel cell system (FCS) and an electrical energy storage system (EESS), and wherein the vehicle further comprises a control system according to any one of the examples of the first aspect of the disclosure.

The powertrain typically comprises one or more electric motors for driving the vehicle. The EESS is typically a high voltage battery, such as an electric battery with a voltage level of at least 60 volts (V), such as at least 100 V, 200 V, 300 V, for example 400 V or 800 V. The FCS may comprise a humidifier, a turbo, a water injector and/or a water separator, in addition to a fuel cell stack comprising one or more fuel cells. Each fuel cell is configured to convert chemical energy of a fuel, typically hydrogen, and an oxidizing agent, typically oxygen, into electricity.

According to a fourth aspect of the disclosure, there is provided a computer program product comprising program code for performing, when executed by a control system, the method of any of the examples of the second aspect of the disclosure.

According to a fifth aspect of the disclosure, there is provided a non-transitory computer-readable storage medium comprising instructions, which when executed by a control system, cause a route planner and a controller of the control system to perform the method of any of the examples of the second aspect of the disclosure.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 is a side view of a vehicle according to an example of the disclosure.
Fig. 2 is a schematic illustration of a control system according to an example of the disclosure.
Fig. 3 is a schematic view of a control system and a vehicle according to an example of the disclosure.
Fig. 4 is a schematic view of a planned route for a vehicle according to an example of the disclosure.
Fig. 5 is a flowchart of a method according to examples of the disclosure.
Fig. 6 is a schematic view of a computer system according to an example of the disclosure.

The drawings show diagrammatic exemplifying embodiments of the present disclosure and are thus not necessarily drawn to scale. It shall be noted that some details in the drawings may be exaggerated in order to better describe and illustrate the disclosure. Like reference characters refer to like elements throughout the description, unless expressed otherwise.

### DETAILED DESCRIPTION

Aspects set forth below represent the necessary information to enable those skilled in the art to practice the disclosure.

The present disclosure is based on a strive to improve the control of flow of energy of a vehicle powertrain comprising a fuel cell system and an electrical energy storage system. For example, by the present disclosure, improved efficiency of the powertrain during operation and/or increased safety of the vehicle during operation may be obtained. Accordingly, by examples of the present disclosure, an improved control system is provided, which at least partly alleviates one or more drawbacks of the prior art, or which at least provides a suitable alternative. In addition, by examples of the present disclosure, a vehicle, a method, a computer program product and a computer readable medium are provided, which at least partly alleviate one or more drawbacks of the prior art, or which at least provide suitable alternatives.

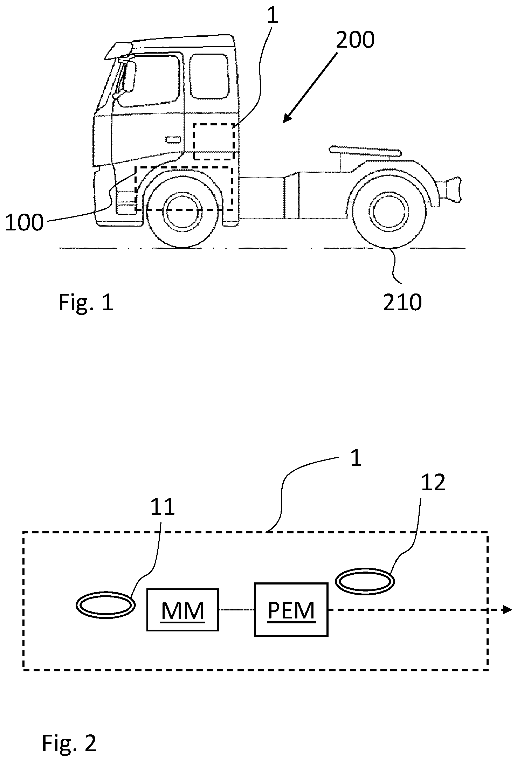

Fig. 1 depicts a side view of a vehicle 200 according to an example of the disclosure. The vehicle 200 is in this example a truck, and more particularly a towing truck or tractor, for towing one or more trailers (not shown). It shall however be understood that the vehicle is not limited only to this type of vehicle, but any other type of vehicle may also be used, such as a bus, a construction equipment, a passenger car or a marine vessel. Construction equipment may be a work machine, such as a wheel loader, a dump truck, an excavator, etc. The vehicle 200 comprises a powertrain 100 and a control system 1 for controlling the powertrain 100. The powertrain 100 is configured to drive ground engaging members 210 of the vehicle 200, which in this example are wheels 210.

Fig. 2 depicts a schematic view of a control system 1 according to an example of the disclosure. The control system 1 in fig. 2 may for example be the control system 1 as depicted in fig. 1. The control system 1 comprises a route planner MM and a controller PEM which are communicatively connected, indicated by a dashed line therebetween. The route planner MM may comprise a computer program 11 and the controller PEM may comprise a computer program 12. The computer programs 11, 12 may be configured to perform a method according to examples as disclosed herein. The route planner MM may be denoted a mission management device and the controller PEM may be denoted a predictive energy management device. In this example, the route planner MM and the controller PEM are separate units, e.g. separate control units which are communicatively connected. However, in alternative examples, the route planner MM and the controller PEM may be implemented as separate software codes which are provided in one control unit, or in one computer. The controller PEM is configured to control a flow of energy of a powertrain 100 during operation, e.g. the powertrain 100 as shown in fig. 1. This is indicated by the dashed arrow which extends out from the control system 1 in fig. 2, depicting that control information, such as in the form of control signals, is transmitted to the powertrain 100.

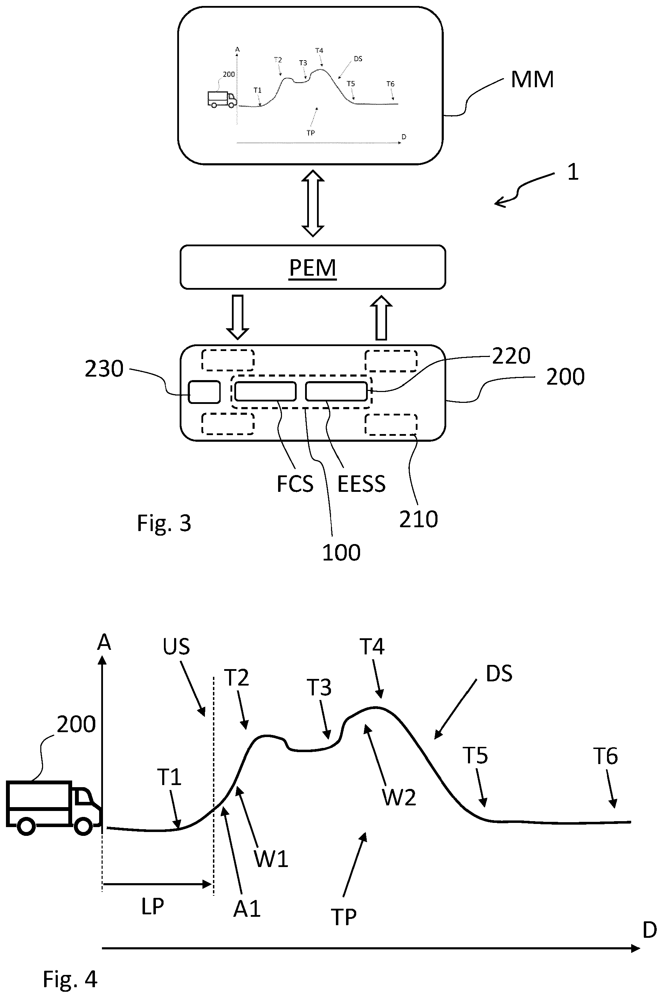

In fig. 3, a schematic view of a control system 1, a vehicle 200 and a powertrain 100 is shown. The control system 1 comprises a route planner MM and a controller PEM according to examples disclosed herein. The vehicle 100 may for example be the vehicle 100 as shown in fig. 1. The vehicle 100 is in fig. 3 shown schematically from above and comprises the powertrain 100 and ground engaging members 210, also here in the form of wheels. The powertrain 100 comprises a fuel cell system, FCS, and an electrical energy storage system, EESS.

The EESS may be an electric battery according to examples of the disclosure. The electric battery EESS is typically a high voltage battery, used for driving one or more electric traction motors (not shown) of the vehicle 200. A high a voltage battery EESS may have a voltage level of at least 60 V, such as at least 200 V, 300 V, 400 V, 500 V or 600 V, for example 400 V or 800 V. The one or more electric traction motors are also configured to function as generators for charging the electric battery EESS during use. Accordingly, the EESS is part of a regenerative braking system 220 of the vehicle 200.

The vehicle 200 further comprises an additional braking system 230 which may be service brakes and/or any other auxiliary brakes. The additional braking system 230 may be denoted a conventional, or primary, braking system. Service brakes, such as disc and/or drum brakes, may be operated by use of a hydraulic and/or pneumatic system (not shown) of the vehicle 200.

The arrows in fig. 3 depict communication paths between the route planner MM and the controller PEM, and between the controller PEM and the powertrain 100, and also between the controller PEM and the braking systems 220, 230. The route planner MM and the controller PEM are typically provided on-board the vehicle 200, even though in alternative examples the route planner MM and/or the controller PEM may be provided offboard the vehicle 200 and arranged to communicate e.g. wirelessly with the vehicle 200 and the powertrain 100.

Fig. 4 depicts a schematic view of a planned route TP for a vehicle 200 according to an example of the disclosure. The planned route TP extends along a distance D. In addition, as shown, an altitude level A along the planned route TP varies. Accordingly, in the shown example, the planned route TP comprises at least one uphill section US and at least one downhill section DS.

With reference to especially figs. 1-4, a control system 1 for controlling a powertrain 100 of a vehicle 200 according to examples of the disclosure will be described in more detail.

The control system 1 comprises:
- a route planner MM which is configured to:
   - determine a respective target SOC level for the EESS at one or more respective target points T1, T2, T3, T4, T5, T6 along a planned route TP for the vehicle 200, and
   - determine a respective target brake distribution level between braking systems 220, 230 of the vehicle 200 for one or more respective downhill sections DS along the planned route TP, wherein the braking systems 220, 230 comprise a regenerative braking system 220 comprising the EESS and at least one additional braking system 230. In the example shown in fig. 4. there are six respective target points T1-T6. Accordingly, a respective target SOC level is in this example determined for each target point T1-T6 by the route planner MM. An interval between each respective target point T1-T6 along the planned route TP may be determined as a function of distance D and/or time of travel along the planned route TP.

A brake distribution level between braking systems 220, 230 of the vehicle 200 may for example be expressed by use of the following equation: $BrakeBlend = \frac{1}{{P}_{slope}} \left[{P}_{battery} {P}_{aux} {P}_{service}\right]$ *BrakeBlend* is the brake distribution level which may be defined as how the required brake power is distributed between the braking systems 220, 230 of the vehicle 200. Pₛₗₒₚₑ is the required brake power for the downhill slope section. P_{battery} is the brake power to be accumulated by the EESS during regenerative braking. Pₐᵤₓ is the brake power to be applied by an auxiliary braking system (if available), and P_{service} is the brake power to be applied by the conventional, or primary, braking system 230 of the vehicle 200. Each braking system typically have limitations on how much brake power P they can accommodate. As mentioned herein, the regenerative braking system 220 is mainly limited by the capacity of the EESS. The other braking systems, such as service brakes, may be limited by available hydraulic/pneumatic pressure and/or by a maximum allowed operating temperature of disc and/or drum brakes. Accordingly, the brake distribution level between the braking systems 220, 230 may be determined by the route planner MM based any one of these brake related parameters. Non-limiting examples of auxiliary braking system may be a brake resistor or a retarder, such as a retarder coupled to an electric traction motor.

The control system 1 further comprises:
- a controller PEM for controlling a flow of energy of the powertrain 100 during operation, wherein the flow of energy comprises a flow of energy from the FCS and from/to the EESS. Accordingly, a flow of energy from the FCS and from the EESS is a respective flow of electrical energy to the aforementioned traction motor(s) for driving the vehicle 200, and a flow of energy to the EESS is an electrical flow of energy from the traction motor(s) which charges the EESS during regenerative braking.

The controller PEM is configured to:
- continuously control the flow of energy in dependence on operating constraints along a look-ahead portion LP of the planned route TP located immediately ahead of the vehicle 200 during operation,
- receive the determined respective target SOC level(s) and target brake distribution level(s) from the route planner MM, and
- continuously control the flow of energy in dependence on the determined respective target SOC level(s) and target brake distribution level(s) of the respective target point(s) T1 and downhill section(s) which are located within the look-ahead portion LP.

Accordingly, in the example shown in fig. 4, the SOC level at the target point T1 is used for controlling the flow of energy since T1 is located within the look-ahead portion LP. During driving, and as soon a following target point T2-T6 and/or downhill section DS is located within the look-ahead portion LP, the SOC level of the following respective target point T2-T6 and/or brake distribution level(s) of the following respective downhill section DS will be used as input for controlling the flow of energy in the powertrain 100. For example, the target SOC level determined for the target point T1 may be optimized for the following uphill section US which is not completely within the look-ahead portion LP. As an example, a higher SOC level for the EESS may be achieved at the target point T1 than a SOC level that would otherwise be regarded as an optimal SOC level by the controller PEM if only regarding information relating to the conditions within the look-ahead portion LP.

At least one of the one or more respective target points T1-T6 may be associated with a first slope section DS along the planned route. In this example, the first slope DS section is the aforementioned downhill section DS. For example, a first target point T5 is associated with a bottom portion of the first slope section DS and a second target point T4 is associated with a top portion of the first slope section DS. Thereby, an optimized SOC level may be determined at the top and at the bottom of the downhill section DS, which can be used by the controller PEM when the respective target point T4, T5 is located within the look-ahead portion LP.

At least one of the one or more respective target points T1, T2 may be associated with a second slope section US along the planned route TP, wherein the second slope section US is an uphill section US. For example, a third target point T1 is associated with a bottom portion of the second slope section US and a fourth target point T2 is associated with a top portion of the second slope section US. Thereby, an optimized SOC level may be determined at the top and at the bottom of the uphill section US, which can be used by the controller PEM when the respective target point T1, T2 is located within the look-ahead portion LP. For example, the determined SOC level for the target point T2 may be optimized so that enough SOC level will be available when reaching a second smaller uphill climb section associated with the target points T3 and T4.

For example, at least one respective target SOC level and/or brake distribution level for at least one respective target point T1-T6 and/or downhill section DS may be determined at, or before, initiating driving of the vehicle 200 along the planned route TP. Additionally, or alternatively, at least one respective target SOC level and/or brake distribution level for at least one respective target point T1-T6 and/or downhill section DS may be determined before the at least one respective target point T1-T6 and/or downhill section is located within the look-ahead portion LP of the vehicle 200 during operation.

The operating constraints which are used by the controller PEM may be at least one of a set vehicle speed associated with the look-ahead portion LP, a topography associated with the look-ahead portion LP and a vehicle weight. For example, the set vehicle speed may be set based on speed limit constraints associated with the look-ahead portion. The set vehicle speed may additionally or alternatively be set based on vehicle constraints, such as maximum possible vehicle speed. For example, a work machine may have a maximum possible speed of 30-50 km/h. The topography may necessitate a higher power output from the FCS and/or the EESS during an uphill climb, and may result in a lower power output from the FCS and/or the EESS during downhill driving.

The controller PEM may be configured to receive the determined respective target SOC level(s) and target brake distribution level(s) from the route planner MM at respective waypoints W1, W2 along the planned route TP during driving along the planned route TP. Thereby, the controller PEM may not have access to all the information from the route planner MM when starting driving. This may for example be advantageous during longer planned routes, such as routes conducted by a truck and trailer combination which travels more than 50 km during one mission, such as more than 100 km during one mission.

The route planner MM may further be configured to:
- determine a need to switch an operation of the FCS between a maximum power mode and a lower power mode at one or more respective auxiliary target points A1 along the planned route TP, and
wherein the controller PEM is further configured to:
- receive the determined need to switch the operation of the FCS from the route planner MM, and
- switch operations of the FCS according to the determined need to switch operation when reaching the respective auxiliary target point A1 during driving along the planned route TP. For example, the controller PEM may be configured to switch operation from the lower power mode to the maximum power mode when reaching the auxiliary target point A1. Thereby, the FCS can be operated at a higher power level when driving in the hilly segment of the planned route TP which is initiated by the uphill section US. When the hilly segment is over, the controller PEM may switch back operation to the lower power mode, e.g. by use of information provided by the route planner MM. The control system 1 may be configured to only allow to switch operation when a first criterion is fulfilled. For example, the first criterion may relate to a level of degradation of the FCS, such as when the level of degradation is below a threshold, i.e. not too high. When the level of degradation is high, e.g. above a threshold, the FCS may be too negatively affected by utilizing the maximum power mode. Additionally, or alternatively, the first criterion may relate to how many times and/or for how long time the FCS has been operated in the maximum power mode. If the FCS has been in the maximum power mode too many times and/or for too long time, it may not be allowed to switch to the maximum power mode anymore, or at least not for a time period.

The SOC level(s) and brake distribution level(s) determined by the route planner MM may be determined based on map information relating to the planned route. The SOC level(s) and brake distribution level(s) may additionally, or alternatively, be determined based on any information relating to the planned route TP, such as current or predicted traffic information, topography, speed limits, pressure level information relating to altitude, current or predicted weather information, including temperature conditions, etc. For example, a reduced ambient pressure may result in a reduced possible power output from the FCS, which may result in that a higher power output is required from the EESS.

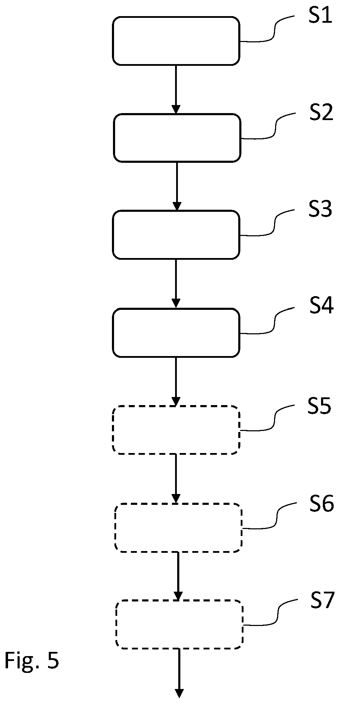

Fig. 5 depicts a flowchart of a computer-implemented method according to examples as disclosed herein. The method is used for controlling a powertrain 100 of a vehicle 200, wherein the powertrain 100 comprises a fuel cell system, FCS, and an electrical energy storage system, EESS.

The method comprises:
S1: determining, by a route planner MM of a control system 1, a respective target state of charge, SOC, level for the EESS at one or more respective target points T1-T6 along a planned route TP for the vehicle 200, and
S2: determining, by the route planner MM, a respective target brake distribution level between braking systems of the vehicle 200 for one or more respective downhill sections DS along the planned route TP, wherein the braking systems comprise a regenerative braking system 220 comprising the EESS and at least one additional braking system 230.

The method further comprises:
S3: receiving, by a controller PEM of the control system 1, the determined respective target SOC level(s) and target brake distribution level(s), and
S4: controlling, by the controller PEM, a flow of energy of the powertrain 100 during operation, wherein the flow of energy comprises a flow of energy from the FCS and from/to the EESS, wherein controlling the flow of energy comprises continuously controlling the flow of energy in dependence on operating constraints along a look-ahead portion LP of the planned route TP located immediately ahead of the vehicle 200 during operation, and further in dependence on the determined respective target SOC level(s) and target brake distribution level(s) of the respective target point(s) T1 and downhill section(s) which are located within the look-ahead portion LP.

At least one of the one or more respective target points T4, T5 may be associated with a first slope section DS along the planned route TP. A first target point T5 may be associated with a bottom portion of the first slope section DS and a second target point T4 may be associated with a top portion of the first slope section DS. As already mentioned in the above, the first slope section DS may be a downhill section DS for which a respective target brake distribution level is determined. Furthermore, as also already mentioned in the above, at least one of the one or more respective target points T1, T2 may be associated with a second slope section US along the planned route TP, wherein the second slope section US is an uphill section US.

The method may further comprise:
S5: determining, by the route planner MM, a need to switch an operation of the FCS between a maximum power mode and a lower power mode at one or more respective auxiliary target points A1 along the planned route TP,
S6: receiving, by the controller PEM, the determined need to switch the operation of the FCS, and
S7: switching operation, by the controller PEM, of the FCS according to the determined need to switch operation when reaching the respective auxiliary target point A1 during driving along the planned route TP. These steps are optional, indicated by boxes with dashed lines in fig. 5.

The steps S1-S7 of the method do not necessarily need to be performed in the order shown in fig. 5, and/or at least some steps may be performed simultaneously, such as step S1 and S2. For example, the steps S1 and S2 may be performed in a repetitive manner, and the steps S3-S4 may also be performed in a repetitive manner.

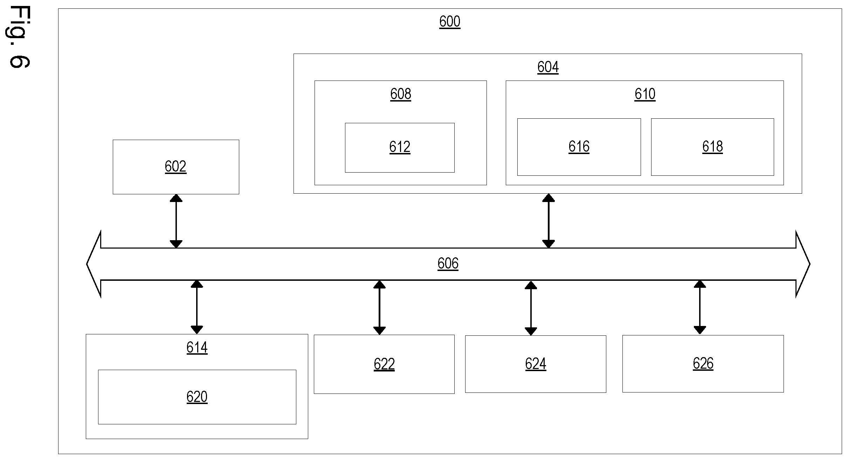

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., randomaccess memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present appended claims. In the drawings and specification, there have been disclosed aspects for purposes of illustration only and not for purposes of limitation, the scope of the inventive concepts being set forth in the following claims.

## Claims

1. A control system (1) for controlling a powertrain (100) of a vehicle (200), wherein the powertrain (100) comprises a fuel cell system, FCS, and an electrical energy storage system, EESS, the control system (1) comprising:
- a route planner (MM) which is configured to:
- determine a respective target state of charge, SOC, level for the EESS at one or more respective target points (T1-T6) along a planned route (TP) for the vehicle (200), and
- determine a respective target brake distribution level between braking systems of the vehicle (200) for one or more respective downhill sections (DS) along the planned route (TP), wherein the braking systems comprise a regenerative braking system (220) comprising the EESS and at least one additional braking system (230),
- a controller (PEM) for controlling a flow of energy of the powertrain (100) during operation, wherein the flow of energy comprises a flow of energy from the FCS and from/to the EESS, wherein the controller (PEM) is configured to:
- continuously control the flow of energy in dependence on operating constraints along a look-ahead portion (LP) of the planned route (TP) located immediately ahead of the vehicle (200) during operation, wherein the look-ahead portion (LP) is shorter than a total length of the planned route (TP),
- receive the determined respective target SOC level(s) and target brake distribution level(s) from the route planner (MM), and
- continuously control the flow of energy in dependence on the determined respective target SOC level(s) and target brake distribution level(s) of the respective target point(s) and downhill section(s) which are located within the look-ahead portion (LP), wherein the target brake distribution level(s) is/are determined to avoid that the at least one additional braking system (230) is no longer working further ahead along the planned route (TP).

2. The control system (1) according to claim 1, wherein at least one of the one or more respective target points (T4, T5) is associated with a first slope section (DS) along the planned route (TP).

3. The control system (1) according to claim 2, wherein a first target point (T5) is associated with a bottom portion of the first slope section (DS) and a second target point (T4) is associated with a top portion of the first slope section (DS).

4. The control system (1) according to claim 2 or 3, wherein the first slope section (DS) is a downhill section (DS) for which a respective target brake distribution level is determined.

5. The control system (1) according to any one of the preceding claims, wherein at least one of the one or more respective target points (T1, T2) is associated with a second slope section (US) along the planned route (TP), wherein the second slope section (US) is an uphill section (US).

6. The control system (1) according to claim 5, wherein a third target point (T1) is associated with a bottom portion of the second slope section (US) and a fourth target point (T2) is associated with a top portion of the second slope section (US).

7. The control system (1) according to any one of the preceding claims, wherein at least one respective target SOC level and/or brake distribution level for at least one respective target point and/or downhill section is determined at, or before, initiating driving of the vehicle (200) along the planned route (TP).

8. The control system (1) according to any one of the preceding claims, wherein at least one respective target SOC level and/or brake distribution level for at least one respective target point and/or downhill section is determined before the at least one respective target point and/or downhill section is located within the look-ahead portion (LP) of the vehicle (200) during operation.

9. The control system (1) according to any one of the preceding claims, wherein the operating constraints are at least one of a set vehicle speed associated with the look-ahead portion (LP), a topography associated with the look-ahead portion (LP) and a vehicle weight.

10. The control system (1) according to any one of the preceding claims, wherein the controller (PEM) is configured to receive the determined respective target SOC level(s) and target brake distribution level(s) from the route planner (MM) at respective waypoints (W1, W2) along the planned route (TP) during driving along the planned route (TP).

11. The control system (1) according to any one of the preceding claims, wherein the route planner (MM) is further configured to:
- determine a need to switch an operation of the FCS between a maximum power mode and a lower power mode at one or more respective auxiliary target points (A1) along the planned route (TP), and
wherein the controller (PEM) is further configured to:
- receive the determined need to switch the operation of the FCS from the route planner (MM), and
- switch operations of the FCS according to the determined need to switch operation when reaching the respective auxiliary target point (A1) during driving along the planned route (TP).

12. A computer-implemented method for controlling a powertrain (100) of a vehicle (200), wherein the powertrain (100) comprises a fuel cell system, FCS, and an electrical energy storage system, EESS, the method comprising:
- determining (S1), by a route planner (MM) of a control system (1), a respective target state of charge, SOC, level () for the EESS at one or more respective target points (T1,..., T6) along a planned route (TP) for the vehicle (200), and
- determining (S2), by the route planner (MM), a respective target brake distribution level () between braking systems of the vehicle (200) for one or more respective downhill sections (DS) along the planned route (TP), wherein the braking systems comprise a regenerative braking system () comprising the EESS and at least one additional braking system (),
the method further comprising:
- receiving (S3), by a controller (PEM) of the control system (1), the determined respective target SOC level(s) and target brake distribution level(s), and
- controlling (S4), by the controller (PEM), a flow of energy of the powertrain (100) during operation, wherein the flow of energy comprises a flow of energy from the FCS and from/to the EESS,
wherein controlling the flow of energy comprises:
- continuously controlling the flow of energy in dependence on operating constraints along a look-ahead portion (LP) of the planned route (TP) located immediately ahead of the vehicle (200) during operation, and further in dependence on the determined respective target SOC level(s) and target brake distribution level(s) of the respective target point(s) and downhill section(s) which are located within the look-ahead portion (LP) , wherein the look-ahead portion (LP) is shorter than a total length of the planned route (TP), and wherein the target brake distribution level(s) is/are determined to avoid that the at least one additional braking system (230) is no longer working further ahead along the planned route (TP).

13. A vehicle (200) comprising a powertrain (100), wherein the powertrain (100) comprises a fuel cell system, FCS, and an electrical energy storage system, EESS, and wherein the vehicle (200) further comprises a control system (1) according to any one of claims 1-11.

14. A computer program product comprising program code for performing, when executed by a control system, the method of claim 12.

15. A non-transitory computer-readable storage medium comprising instructions, which when executed by a control system, cause a route planner (MM) and a controller (PEM) of the control system to perform the method of claim 12.

## Patentansprüche

1. Steuersystem (1) zum Steuern eines Antriebsstrangs (100) eines Fahrzeugs (200), wobei der Antriebsstrang (100) ein Brennstoffzellensystem, FCS, und ein elektrisches Energiespeichersystem, EESS, umfasst, wobei das Steuersystem (1) Folgendes umfasst:
- einen Routenplaner (MM), der für Folgendes konfiguriert ist:
- Bestimmen eines jeweiligen Zielniveaus des Ladezustands, SOC, für das EESS an einem oder mehreren jeweiligen Zielpunkten (T1-T6) entlang einer geplanten Route (TP) für das Fahrzeug (200), und
- Bestimmen eines jeweiligen Zielniveaus der Bremskraftverteilung zwischen den Bremssystemen des Fahrzeugs (200) für einen oder mehrere jeweilige Gefällebereiche (DS) entlang der geplanten Route (TP), wobei die Bremssysteme ein regeneratives Bremssystem (220), das das EESS umfasst, und mindestens ein zusätzliches Bremssystem (230) umfassen,
- eine Steuerung (PEM) zum Steuern eines Energieflusses des Antriebsstrangs (100) während des Betriebs, wobei der Energiefluss einen Energiefluss vom FCS und vom/zum EESS umfasst, wobei die Steuerung (PEM) für Folgendes konfiguriert ist:
- kontinuierliches Steuern des Energieflusses in Abhängigkeit von Betriebsbeschränkungen entlang eines Vorschauabschnitts (LP) der geplanten Route (TP), der sich unmittelbar vor dem Fahrzeug (200) während des Betriebs befindet, wobei der Vorschauabschnitt (LP) kürzer ist als die Gesamtlänge der geplanten Route (TP),
- Bestimmen des bzw. der bestimmten jeweiligen Zielniveaus des SOC und Zielniveaus der Bremskraftverteilung vom Routenplaner (MM), und
- kontinuierliches Steuern des Energieflusses in Abhängigkeit von dem bzw. den bestimmten jeweiligen Zielniveaus des SOC und Zielniveaus der Bremskraftverteilung des bzw. der jeweiligen Zielpunkte und Gefällebereiche, die sich innerhalb des Vorschauabschnitts (LP) befinden, wobei das bzw. die Zielniveaus der Bremskraftverteilung bestimmt werden, um zu vermeiden, dass das mindestens eine zusätzliche Bremssystem (230) später entlang der geplanten Route (TP) nicht mehr funktioniert.

2. Steuersystem (1) nach Anspruch 1, wobei mindestens einer des einen oder der mehreren jeweiligen Zielpunkte (T4, T5) einem ersten Hangbereich (DS) entlang der geplanten Route (TP) zugeordnet ist.

3. Steuersystem (1) nach Anspruch 2, wobei ein erster Zielpunkt (T5) einem unteren Abschnitt des ersten Hangbereichs (DS) zugeordnet ist und ein zweiter Zielpunkt (T4) einem oberen Abschnitt des ersten Hangbereichs (DS) zugeordnet ist.

4. Steuersystem (1) nach Anspruch 2 oder 3, wobei der erste Hangbereich (DS) ein Gefällebereich (DS) ist, für den ein jeweiliges Zielniveau der Bremskraftverteilung bestimmt wird.

5. Steuersystem (1) nach einem der vorhergehenden Ansprüche, wobei mindestens einer des einen oder der mehreren jeweiligen Zielpunkte (T1, T2) einem zweiten Hangbereich (US) entlang der geplanten Route (TP) zugeordnet ist, wobei der zweite Hangbereich (US) ein Steigungsbereich (US) ist.

6. Steuersystem (1) nach Anspruch 5, wobei ein dritter Zielpunkt (T1) einem unteren Abschnitt des zweiten Hangabschnitts (US) zugeordnet ist und ein vierter Zielpunkt (T2) einem oberen Abschnitt des zweiten Hangabschnitts (US) zugeordnet ist.

7. Steuersystem (1) nach einem der vorhergehenden Ansprüche, wobei mindestens ein jeweiliges Zielniveau des SOC und/oder Zielniveau der Bremskraftverteilung für mindestens einen jeweiligen Zielpunkt und/oder Gefällebereich bei oder vor dem Starten der Fahrt des Fahrzeugs (200) entlang der geplanten Route (TP) bestimmt wird.

8. Steuersystem (1) nach einem der vorhergehenden Ansprüche, wobei mindestens ein jeweiliges Zielniveau des SOC und/oder Zielniveau der Bremskraftverteilung für mindestens einen jeweiligen Zielpunkt und/oder Gefällebereich bestimmt wird, bevor sich der mindestens eine jeweilige Zielpunkt und/oder Gefällebereich innerhalb des Vorschauabschnitts (LP) des Fahrzeugs (200) während des Betriebs befindet.

9. Steuersystem (1) nach einem der vorhergehenden Ansprüche, wobei die Betriebsbeschränkungen mindestens eine von einer dem Vorschauabschnitt (LP) zugeordneten eingestellten Fahrzeuggeschwindigkeit, einer dem Vorschauabschnitt (LP) zugeordneten Topografie und einem Fahrzeuggewicht sind.

10. Steuersystem (1) nach einem der vorhergehenden Ansprüche, wobei die Steuerung (PEM) dazu konfiguriert ist, das bzw. die bestimmten jeweiligen Zielniveaus des SOC und Zielniveaus der Bremskraftverteilung vom Routenplaner (MM) an jeweiligen Wegpunkten (W1, W2) entlang der geplanten Route (TP) während der Fahrt entlang der geplanten Route (TP) zu empfangen.

11. Steuersystem (1) nach einem der vorhergehenden Ansprüche, wobei der Routenplaner (MM) ferner für Folgendes konfiguriert ist:
- Bestimmen einer Notwendigkeit, einen Betrieb des FCS an einem oder mehreren jeweiligen Hilfszielpunkten (A1) entlang der geplanten Route (TP) zwischen einem Maximalleistungsmodus und einem Minimalleistungsmodus umzuschalten, und
wobei die Steuerung (PEM) ferner für Folgendes konfiguriert ist:
- Empfangen der bestimmten Notwendigkeit, den Betrieb des FCS umzuschalten, vom Routenplaner (MM), und
- Umschalten der Betriebe des FCS gemäß der bestimmten Notwendigkeit, den Betrieb umzuschalten, wenn der jeweilige Hilfszielpunkt (Al) während der Fahrt entlang der geplanten Route (TP) erreicht wird.

12. Computerimplementiertes Verfahren zum Steuern eines Antriebsstrangs (100) eines Fahrzeugs (200), wobei der Antriebsstrang (100) ein Brennstoffzellensystem, FCS, und ein elektrisches Energiespeichersystem, EESS, umfasst, wobei das Verfahren Folgendes umfasst:
- Bestimmen (S1), durch einen Routenplaner (MM) eines Steuersystems (1), eines jeweiligen Zielniveaus () des Ladezustands, SOC, für das EESS an einem oder mehreren jeweiligen Zielpunkten (T1-T6) entlang einer geplanten Route (TP) für das Fahrzeug (200), und
- Bestimmen (S2), durch den Routenplaner (MM), eines jeweiligen Zielniveaus () der Bremskraftverteilung zwischen den Bremssystemen des Fahrzeugs (200) für einen oder mehrere jeweilige Gefällebereiche (DS) entlang der geplanten Route (TP), wobei die Bremssysteme ein regeneratives Bremssystem (), das das EESS umfasst, und mindestens ein zusätzliches Bremssystem () umfassen,
wobei das Verfahren ferner Folgendes umfasst:
- Empfangen (S3), durch eine Steuerung (PEM) des Steuersystems (1), des bzw. der bestimmten jeweiligen Zielniveaus des SOC und Zielniveaus der Bremskraftverteilung, und
- Steuern (S4), durch die Steuerung (PEM), eines Energieflusses des Antriebsstrangs (100) während des Betriebs, wobei der Energiefluss einen Energiefluss vom FCS und vom/zum EESS umfasst,
wobei das Steuern des Energieflusses Folgendes umfasst:
- kontinuierliches Steuern des Energieflusses in Abhängigkeit von Betriebsbeschränkungen entlang eines Vorschauabschnitts (LP) der geplanten Route (TP), der sich unmittelbar vor dem Fahrzeug (200) während des Betriebs befindet, und ferner in Abhängigkeit von dem bzw. den bestimmten jeweiligen Zielniveaus des SOC und Zielniveaus der Bremskraftverteilung des bzw. der jeweiligen Zielpunkte und Gefällebereiche, die sich innerhalb des Vorschauabschnitts (LP) befinden, wobei der Vorschauabschnitt (LP) kürzer ist als die Gesamtlänge der geplanten Route (TP), und wobei das bzw. die Zielniveaus der Bremskraftverteilung bestimmt werden, um zu vermeiden, dass das mindestens eine zusätzliche Bremssystem (230) später entlang der geplanten Route (TP) nicht mehr funktioniert.

13. Fahrzeug (200), das einen Antriebsstrang (100) umfasst, wobei der Antriebsstrang (100) ein Brennstoffzellensystem, FCS, und ein elektrisches Energiespeichersystem, EESS, umfasst, und wobei das Fahrzeug (200) ferner ein Steuersystem (1) nach einem der Ansprüche 1-11 umfasst.

14. Computerprogrammprodukt, das Programmcode zum Durchführen des Verfahrens nach Anspruch 12 umfasst, wenn er von einem Steuersystem ausgeführt wird.

15. Nichtflüchtiges, computerlesbares Speichermedium, das Anweisungen umfasst, die, wenn sie von einem Steuersystem ausgeführt werden, einen Routenplaner (MM) und eine Steuerung (PEM) des Steuersystems dazu veranlassen, das Verfahren nach Anspruch 12 durchzuführen.

## Revendications

1. Système de commande (1) destiné à commander un groupe motopropulseur (100) d'un véhicule (200), le groupe motopropulseur (100) comprenant un système de pile à combustible, FCS, et un système de stockage d'énergie électrique, EESS, le système de commande (1) comprenant :
- un planificateur d'itinéraire (MM) configuré pour :
- déterminer un niveau d'état de charge cible respectif, SOC, pour l'EESS en un ou plusieurs points cibles respectifs (T1-T6) le long d'un itinéraire planifié (TP) pour le véhicule (200), et
- déterminer un niveau de répartition de freinage cible respectif entre les systèmes de freinage du véhicule (200) pour une ou plusieurs tronçons de descente (DS) respectifs le long de l'itinéraire planifié (TP), les systèmes de freinage comprenant un système de freinage à récupération (220) comprenant l'EESS et au moins un système de freinage supplémentaire (230),
- un régulateur (PEM) pour commander un flux d'énergie du groupe motopropulseur (100) pendant le fonctionnement, le flux d'énergie comprenant un flux d'énergie provenant du FCS et provenant de/allant vers l'EESS, le régulateur (PEM) étant configuré pour :
- contrôler en permanence le flux d'énergie en fonction des contraintes d'exploitation le long d'une partie anticipée (LP) de l'itinéraire planifié (TP) située immédiatement devant le véhicule (200) pendant le fonctionnement, la partie anticipée (LP) étant plus courte qu'une longueur totale de l'itinéraire planifié (TP),
- recevoir le(s) niveau(s) de SOC cible(s) et le(s) niveau(s) cible(s) de répartition des freins déterminés respectifs du planificateur d'itinéraire (MM), et
- contrôler en continu le flux d'énergie en fonction du ou des niveaux de charge cibles respectifs déterminés et du ou des niveaux de répartition des freins cibles du ou des points cibles et du ou des tronçons de descente respectifs situés dans la partie anticipée (LP), le ou les niveaux de répartition des freins cibles étant déterminés pour éviter que l'au moins un système de freinage supplémentaires (230) cesse de fonctionner plus vers l'avant le long de l'itinéraire planifié (TP).

2. Système de commande (1) selon la revendication 1, dans lequel au moins un des un ou plusieurs points cibles respectifs (T4, T5) est associé à une première section de pente (DS) le long de l'itinéraire planifié (TP).

3. Système de commande (1) selon la revendication 2, dans lequel un premier point cible (T5) est associé à une partie inférieure de la première section de pente (DS) et un deuxième point cible (T4) est associé à une partie supérieure de la première section de pente (DS).

4. Système de commande (1) selon la revendication 2 ou 3, dans lequel la première section de pente (DS) est un tronçon de descente (DS) pour lequel un niveau cible respectif de répartition de freinage est déterminé.

5. Système de commande (1) selon l'une quelconque des revendications précédentes, dans lequel au moins un des un ou plusieurs points cibles respectifs (T1, T2) est associé à une seconde section de pente (US) le long de l'itinéraire planifié (TP), la seconde section de pente (US) étant une section de montée (US).

6. Système de commande (1) selon la revendication 5, dans lequel un troisième point cible (T1) est associé à une partie inférieure de la deuxième section de pente (US) et un quatrième point cible (T2) est associé à une partie supérieure de la deuxième section de pente (US).

7. Système de commande (1) selon l'une quelconque des revendications précédentes, dans lequel au moins un niveau de SOC cible respectif et/ou un niveau de répartition de freinage pour au moins un point cible et/ou un tronçon de descente respectif est déterminé au moment du ou avant le début de conduite du véhicule (200) le long de l'itinéraire planifié (TP).

8. Système de commande (1) selon l'une quelconque des revendications précédentes, dans lequel au moins un niveau de SOC cible respectif et/ou un niveau de répartition de freinage pour au moins un point cible et/ou un tronçon de descente respectif est déterminé avant que l'au moins un point cible et/ou tronçon de descente respectif ne soit situé dans la partie anticipée (LP) du véhicule (200) pendant le fonctionnement.

9. Système de commande (1) selon l'une quelconque des revendications précédentes, dans lequel les contraintes de fonctionnement sont au moins l'une d'une vitesse de véhicule établie associée à la partie anticipée (LP), d'une topographie associée à la partie anticipée (LP) et d'un poids de véhicule.

10. Système de commande (1) selon l'une quelconque des revendications précédentes, dans lequel le régulateur (PEM) est configuré pour recevoir le(s) niveau(s) SOC cible(s) et le(s) niveau(s) cible(s) de répartition de freinage cible déterminés du planificateur d'itinéraire (MM) à des points de cheminement respectifs (W1, W2) le long de l'itinéraire planifié (TP) pendant la conduite le long de l'itinéraire planifié (TP).

11. Système de commande (1) selon l'une quelconque des revendications précédentes, dans lequel le planificateur d'itinéraire (MM) est en outre configuré pour :
- déterminer s'il est nécessaire de commuter un fonctionnement du FCS entre un mode de puissance maximale et un mode de puissance inférieure à un ou plusieurs points cibles auxiliaires respectifs (Al) le long de l'itinéraire planifié (TP), et
le régulateur (PEM) est en outre configuré pour :
- recevoir le besoin déterminé de commuter le fonctionnement du FCS à partir du planificateur d'itinéraire (MM), et
- commuter les opérations du FCS en fonction de la nécessité déterminée de commuter le fonctionnement lorsque le point cible auxiliaire respectif (Al) est atteint pendant la conduite sur l'itinéraire planifié (TP).

12. Procédé informatisé de commande d'un groupe motopropulseur (100) d'un véhicule (200), le groupe motopropulseur (100) comprenant un système de pile à combustible, FCS, et un système de stockage d'énergie électrique, EESS, le procédé comprenant :
- la détermination (S1), par un planificateur d'itinéraire (MM) d'un système de commande (1), d'un état de charge cible respectif, SOC, de niveau () pour l'EESS en un ou plusieurs points cibles respectifs (T1, ..., T6) le long d'un itinéraire planifié (TP) pour le véhicule (200), et
- la détermination (S2), par le planificateur d'itinéraire (MM), d'un niveau de répartition de freinage cible respectif () entre les systèmes de freinage du véhicule (200) pour un ou plusieurs tronçons de descente respectifs (DS) le long de l'itinéraire planifié (TP), les systèmes de freinage comprenant un système de freinage à récupération () comprenant l'EESS et au moins un système de freinage supplémentaire (), le procédé comprenant en outre :
- la réception (S3), par un régulateur (PEM) du système de commande (1), du(des) niveau(s) de SOC cible(s) et du(des) niveau(s) cible(s) de répartition des freins cible(s) déterminés respectifs, et
- le contrôle (S4), par le régulateur (PEM), d'un flux d'énergie du groupe motopropulseur (100) pendant le fonctionnement, le flux d'énergie comprenant un flux d'énergie provenant du FCS et provenant de/allant vers l'EESS,
le contrôle du flux d'énergie comprenant :
- le contrôle permanent du flux d'énergie en fonction des contraintes de fonctionnement le long d'une partie anticipée (LP) de l'itinéraire planifié (TP) située immédiatement devant le véhicule (200) pendant le fonctionnement et en outre en fonction du ou des niveaux cibles respectifs de SOC et du ou des niveaux cibles de répartition des freins du ou des points cibles et des tronçons de descente déterminés respectifs qui sont situés dans la partie anticipée (LP), la partie anticipée (LP) étant plus courte qu'une longueur totale de l'itinéraire planifié (TP), et le(s) niveau(s) de répartition des freins cible(s) étant déterminé(s) pour éviter que l'au moins un système de freinage supplémentaire (230) cesse de fonctionne plus vers l'avant le long de l'itinéraire planifié (TP).

13. Véhicule (200) comprenant un groupe motopropulseur (100), le groupe motopropulseur (100) comprenant un système de pile à combustible, FCS, et un système de stockage d'énergie électrique, EESS, et le véhicule (200) comprenant en outre un système de commande (1) selon l'une quelconque des revendications 1 à 11.

14. Produit de programme informatique comprenant un code de programme pour exécuter, lorsqu'il est exécuté par un système de commande, le procédé selon la revendication 12.

15. Support de stockage non transitoire lisible par ordinateur comprenant des instructions qui, lorsqu'elles sont exécutées par un système de commande, amènent un planificateur d'itinéraire (MM) et un régulateur (PEM) du système de commande à exécuter le procédé selon la revendication 12.
